# EUROPEAN PATENT SPECIFICATION

(11) **EP 3 191 430 B1**
(45) Date of publication and mention of the grant of the patent: **14.02.2024**
(21) Application number: 15839782.8
(22) Date of filing: 11.09.2015
(51) Int. Cl.: C05D 1/00, C05G 3/00, C05D 9/02, C05G 5/30

(54) **FERTILIZER COATED WITH LINEAR ALCOHOL ETHOXYLATE AND OPTIONALLY RAW PLANT OIL**
DÜNGEMITTEL MIT BESCHICHTUNG AUS LINEAREM ALKOHOLETHOXYLAT UND GEGEBENENFALLS PFLANZENROHÖL
ENGRAIS ENROBÉ D'ÉTHOXYLATE D'ALCOOL LINÉAIRE ET ÉVENTUELLEMENT D'HUILE VÉGÉTALE BRUTE

(30) Priority: 12.09.2014 NZ 63139614
(43) Date of publication of application: 19.07.2017
(73) Proprietor: Southstar Technologies Limited, Hamilton 3204 (NZ)
(72) Inventor: ZANDER, Regan James, Hamilton 3204 (NZ); ZANDER, Murray Selwin, Hamilton 3204 (NZ)
(74) Representative: McGeough, Gemma Ann
(86) International application number: PCT/NZ2015/050140
(87) International publication number: WO 2016/039645

(56) References cited:
- EP-A1- 0 025 780
- WO-A1-96/23408
- WO-A1-96/23746
- WO-A1-2013/019121
- JP-A- 2000 185 990
- US-A- 5 472 631
- US-A1- 2003 164 015
- US-A1- 2011 302 975
- US-A1- 2012 045 587
- US-B1- 7 022 651
- US-B2- 6 689 720
- ANON.: 'Stepan Product Bulletin BIO-SOFT® N 1 SERIES' 2014, XP055417145 Retrieved from the Internet: <URL:http://www.stepan.com/uploadedFiles/Li terature_and_Downloads/Product_Bulletins/Su rfactants/BIO-SOFT%C2%AE/BIOSOFTN1 SERIES.pdf> [retrieved on 2015-11-05]

## Description

### TECHNICAL FIELD

The present invention relates to improvements in and relating to fertiliser and like compositions and the manufacture thereof. In particular the present invention relates to coated fertiliser compositions.

### BACKGROUND ART

The use of fertiliser compositions in agriculture is well known.

For illustrative purposes the present invention will now be discussed primarily in relation to phosphate fertilisers. However, it should be understood that the principles of the present invention can be applied to other types of fertiliser, and hence any discussion in relation to phosphate fertilisers should not be seen as limiting.

When fertilisers are being applied to an area of land it is often useful to at the same time also apply other trace elements to the soil which are beneficial for plant growth or animal health. Ideally to make this a one step process the trace elements are coated onto a fertiliser granule or chip for delivery to the land at the same time as the fertiliser. However, phosphate fertilisers can chemically react with the trace elements. In order to overcome this problem US 20110214465 teaches the use of a barrier coating in between the fertiliser granule or chip and the coating layer containing the trace elements.

Another problem with fertilisers is that the granules or chips can - when they contact one another during transportation, or handling - produce a lot of dust which, is problematic and can clog agricultural equipment and also be a health risk if inhaled. However, when overcoming this problem and providing a dust suppressant, it is also important that the fertiliser granules or chips remain dry and free flowing and are not tacky or otherwise prone to agglomerating together.

Another problem that exists is the ability to hold trace elements in suspension in a coating composition, so that once a coating composition has been homogenised, the trace elements can be uniformly applied to fertiliser chips and granules during a coating process. It would also be useful to have a coating composition which can hold trace elements in suspension, for a period of time, after homogenization of the coating composition and trace elements therein - so the coating composition can be made in advance of the time of actual use when it is applied to the fertiliser chips or granules. JP2000185990A discloses coated granular fertilizers comprising a granular fertilizer and a film comprising a C₇-C₃₀ higher secondary alcohol ethoxylate, a resin comprising soy bean oil and/or linseed oil and a filler such as talc, diatomaceous earth, kaolin, bentonite, silica, mica, glass, alumina, calcium carbonate, calcium sulfate, starch, cellulose, chitin, wood powder in a size of 0.2-30 µm. EP 0025780A1 discloses an anti-caking agent for fertilizer granules comprising a wax, C16-18 alcohol ethoxylate and talcum, clays and/or kieselguhr with a diameter below 20 µm.

It is an object of the present invention to address the foregoing problems or at least to provide the public with a useful choice.

Unless the context clearly requires otherwise, throughout the description and the claims, the words "comprise", "comprising", and the like, are to be construed in an inclusive sense as opposed to an exclusive or exhaustive sense, that is to say, in the sense of "including, but not limited to".

Further aspects and advantages of the present invention will become apparent from the ensuing description which is given by way of example only.

### DEFINITIONS

The term 'fertiliser' as used herein refers to any substance added to soil, land or other plant growth medium in order to increase fertility.

The terms 'granule' and 'chip' as used herein are used interchangeably and refer to a small compact particle of substance. The particle will generally be of a size in the order of substantially between 1mm -10mm and most preferably between 2mm-5mm. The granule/chip may be naturally occurring or may be fashioned by human manipulation.

The term 'mineral' as used herein refers to a solid naturally occurring substance which is beneficial to a plant or animal life. Some non-limiting exemplary examples will be detailed subsequently herein.

The term 'uncoated fertiliser' refers to uncoated granule or chip of fertiliser.

The term 'trace elements' as used herein refers to a chemical element found in small quantities in plants and/or the earth and which is used by organisms, including plants and animals, and is essential or beneficial, to their physiology. Some non-limiting exemplary examples will be detailed subsequently herein.

The term 'assimilable' as used herein refers to a substance which is able to be absorbed by a plant or animal.

### DISCLOSURE OF THE INVENTION

According to a first aspect of the present invention there is provided a coating composition as defined in claim 1.

In some preferred embodiments, the at least one powdered trace element has an average particle size of less than 45 µm.

In some preferred embodiments the average particle size of the trace element may be between 2 - 10 µm.

Preferably, the average particle size of the trace element may be substantially 2 µm.

According to a second aspect of the present invention there is provided a fertiliser composition as defined in claim 5.

### BEST MODES FOR CARRYING OUT THE INVENTION

### Example 1: LAE (1.4% per tonne)

This composition not according to the present invention is made by adding trace elements in the form of copper and zinc 2 µm powder to Linear Alcohol Ethoxylate in the amounts indicated below:

### 4kg Linear Alcohol Ethoxylate

4kg Cuprous Oxide sub 2 µm (Commercial name Nordox) powder 6kg Zinc Oxide sub 45 µm (Commercial name White Seal) powder The inventors have found this is the minimum level of LAE required in order to get this quantity of trace element powder into the LAE solution.

Due to the low surface tension of LAE the granular coverage is much greater with LAE than say a similar water based solution - (i.e. more water would be needed to achieve the same effect). This product is H₂O free which prevents ammonia from being released (Health and Safety) and also prevents an ammonia reaction with the zinc and copper micro-nutrients.

The inventors have found that over the period of 30 days the copper and zinc powder remained in suspension in a sealed container. When exposed to air (without a lid) there is little change in viscosity or suspension.

By way of contrast adding the same powders to H₂O in a sealed container and the powders will completely settle within 30 days. Unsealed, water will full hydrate out within 30 days at 20 °C 70%

### Relative Humidity.

The Advantage of LAE vs water (H₂O) based suspension is that when the lid is removed the water hydrates out leaving the mixture hard and unworkable.

Also Cuprous oxide when in water begins to create a "skin" on the top of the mixture. This still occurs (Within 48 hours) when sealed and air removed. The H₂O free LAE mixture isn't effected, by this skinning effect (This is a major benefit)

### Example 2: LAE / Canola Oil 50/50 at (1.4% per tonne)

This composition according to the present invention is made by adding trace elements in the form of copper and zinc powder to a mixture of raw Canola Oil and Linear Alcohol Ethoxylate in the amounts indicated below:
2kg raw Cold Pressed Canola Oil
2kg Linear Alcohol Ethoxylate
4kg Cuprous Oxide sub 2 µm (Commercial name Nordox) powder 6kg Zinc Oxide sub 45 µm (Commercial name White Seal) powder Adding of the Canola Oil reduces cost compared to just using LAE alone as per Example 1, yet still removes the need for H₂O to be present.

The LAE is still needed to "Dry" the coating.

If you increase the Canola Oil ratio past the 1:1 ratio with LAE the product becomes too "oily" and will remain tacky (Not desired).

As with Example 1 the inventors have found that over the period of 30 days the copper and zinc powder remained in suspension in a sealed container. When exposed to air (without a lid) there is little change in viscosity or suspension.

### Example 3: LAE (0.3% per tonne) and trace elements coating DAP (not part of the invention)

4kg Cuprous Oxide sub 2 µm (Commercial name Nordox)
6kg Zinc Oxide sub 45 µm (Commercial name White Seal) powder 3kg LAE
987kg DAP granules

In this example the Zinc Oxide powder and the Cuprous Oxide powder are blended together along with DAP before LAE is added and mixed into the blend to attach the trace elements to the outside of the granule.

### Example 4: LAE / Palm Oil 50/50 at (1.4% per tonne)

This composition according to the present invention is made by adding trace elements in the form of magnesium and zinc powder to a mixture of raw Palm Oil and Linear Alcohol Ethoxylate in the amounts indicated below:
2kg raw Palm Oil
2kg Linear Alcohol Ethoxylate
4kg Boron or elemental Sulphur
6kg Zinc Oxide sub 45 µm (Commercial name White Seal) powder

If you increase the Canola Oil ratio past the 1:1 ratio with LAE the product becomes too "oily" and will remain tacky (Not desired).

### Example 5: DAP coated with LAE/ Canola and Zinc and Copper

Here 998kg of DAP is mixed with 2kg of composition in Example 2 in a rotary mixer to form a coating over the DAP which contains trace elements.

### ALTERNATE WAYS TO IMPLEMENT THE INVENTION

The raw plant oil may be any plant oil provided it doesn't react with urea or other acidulated fertilisers. The inventors have found that "refined" plant oils do not work as well as raw oils. As the refining and bleaching process (used on plant oils typically for food production) removes the natural waxes and hardeners in the oil that help the drying process when applied to a fertilser.

In one preferred embodiment the oil may be a vegetable based oil.

In one preferred embodiment the oil may be raw linseed oil.

The plant oil may also be selected from any one of the following:
- Sunflower oil;
- Palm oil;
- Soy bean oil;
- Canola oil;
- Olive oil;
- Sesame seed oil; and
- Peanut oil.

However, this list should not be seen as limiting as other similar plant based oils may also be suitable.

The trace elements may be any trace elements it is desired to deliver to a plant. In some cases the trace elements may benefit the plant (e.g. for increased growth or other desired physiological response) and in other cases the trace elements may be for delivery to an animal via the animal's ingestion of a plant.

Some non-limiting exemplary examples of suitable powdered trace elements for the coating include plant and/or animal assimilable forms of:
- Magnesium;
- Silicon;
- Copper;
- Boron;
- Sulphur;
- Selenium;
- Zinc;
- Iron;
- Manganese;
- Iodine; and
- Calcium.

However this list is not exhaustive. The purpose of the trace elements is in many cases to enhance the value of the plant to an animal. For example, the inclusion of selenium in a plant increases the levels of selenium within an animal which ingests said plant.

The particle size of the trace elements may be selected from 2,3,4,5,6,7,8, 9 or 10 µm.

The exact particle size may depend on the trace element being used.

In one preferred embodiment the powdered trace element may be in the form of magnesium oxide having an average particle size of less than 45 µm.

The minerals may be any minerals it is desired to deliver to a plant. In some cases whilst the minerals may primarily benefit the plant (e.g. for increased growth or other desired physiological response) the minerals may also be beneficial to an animal upon delivery thereto via the animal's ingestion of a plant.

Some non-limiting exemplary examples of suitable minerals for the core include plant assimilable forms of:
- Phosphorous;
- Nitrogen;
- Potassium; and
- Carbon.

However this list is again not exhaustive. The purpose of the minerals is generally to improve the physiology of a plant, or in some cases plant and/or animal which assimilates the mineral.

It should be noted that carbon can as well as forming a core also be used in powdered form having an average particle size of less than 45 µm in a manner similar to trace elements such as MgO.

In some preferred embodiments the fertiliser may be selected from one or more of the following assimilable forms:
- Single super phosphate;
- Diammonium phosphate;
- Monoammonium phosphate;
- Ammonium Polyphosphate;
- Ammonium sulphate;
- Potassium chloride;
- Potassium Sulphate;
- Potash e.g. potassium carbonate or potassium hydrochloride.
- Granular DAP;
- Granular MAP;
- Granular Super Phosphate / Triple Super Phosphate;
- Granular MOP;
- Magnesium Oxide Chip average particle size of 45 micron or above; and
- Lime Chip.

Again this list is not intended to be exhaustive.

In general the fertiliser chips or granules will have an average particle size of 2-4mm but occasionally up to 10mm.

The acrylic emulsion used when creating a plurality of layers around the granule/chip may be any suitable stable emulsion having regard to the composition and its intended use.

The acrylic emulsion may be PRIMAL^{™} - E-1764K Acrylic Emulsion Polymer from ROHM HAAS. Other acrylic emulsions are envisaged which have similar characteristics to PRIMAL^{™} Acrylic Emulsion Polymer.

The entire disclosures of all applications, patents and publications cited above and below, if any, are herein incorporated by reference.

Reference to any prior art in this specification is not, and should not be taken as, an acknowledgement or any form of suggestion that that prior art forms part of the common general knowledge in the field of endeavour in any country in the world.

Where in the foregoing description reference has been made to integers or components having known equivalents thereof, those integers are herein incorporated as if individually set forth.

## Claims

1. A coating composition which includes a 1:1:5 mixture of a linear alcohol ethoxylate together with raw plant oil and at least one powdered trace element.

2. A coating composition as claimed in claim 1, wherein the at least one trace element has an average particle size of less than 45 µm.

3. A coating composition as claimed in claim 1 or claim 2 wherein the trace element has an average particle size of substantially between 2 - 10 µm.

4. A coating composition as claimed in claim 3 wherein the trace element has an average particle size of substantially 2 µm.

5. A fertiliser composition which includes a core in the form of a granule or chip which is coated with a layer comprising a 1:1:5 mixture of a linear alcohol ethoxylate together with raw plant oil and at least one powdered trace element.

## Patentansprüche

1. Beschichtungszusammensetzung, die eine 1:1:5-Mischung eines linearen Alkoholethoxylats zusammen mit rohem Pflanzenöl und mindestens einem pulverförmigen Spurenelement enthält.

2. Beschichtungszusammensetzung nach Anspruch 1, wobei das mindestens eine Spurenelement eine durchschnittliche Partikelgröße von weniger als 45 µm aufweist.

3. Beschichtungszusammensetzung nach Anspruch 1 oder Anspruch 2, wobei das Spurenelement eine durchschnittliche Partikelgröße von im Wesentlichen zwischen 2 und 10 µm aufweist.

4. Beschichtungszusammensetzung nach Anspruch 3, wobei das Spurenelement eine durchschnittliche Partikelgröße von im Wesentlichen 2 µm aufweist.

5. Düngemittelzusammensetzung, die einen Kern in Form eines Granulats oder Chips enthält, der mit einer Schicht überzogen ist, die eine 1:1:5-Mischung aus einem linearen Alkoholethoxylat zusammen mit rohem Pflanzenöl und mindestens einem pulverförmigen Spurenelement umfasst.

## Revendications

1. Une composition de revêtement qui comprend un mélange 1:1:5 d'un éthoxylate d'alcool linéaire avec de l'huile végétale brute et au moins un oligo-élément en poudre.

2. Composition de revêtement selon la revendication 1, dans laquelle le au moins un oligo-élément a une taille de particule moyenne inférieure à 45 µm.

3. Composition de revêtement selon la revendication 1 ou la revendication 2, dans laquelle l'oligo-élément a une taille de particule moyenne sensiblement comprise entre 2 et 10 µm.

4. Composition de revêtement selon la revendication 3, dans laquelle l'oligo-élément a une taille de particule moyenne de sensiblement 2 µm.

5. Composition d'engrais qui comprend un noyau sous la forme d'un granulé ou d'un copeau qui est enrobé d'une couche comprenant un mélange 1:1:5 d'un éthoxylate d'alcool linéaire avec de l'huile végétale brute et au moins un oligo-élément en poudre.
